# EUROPEAN PATENT APPLICATION

(11) **EP 2 154 629 A1**
(43) Date of publication of application: **17.02.2010**
(21) Application number: 08752409.6
(22) Date of filing: 08.05.2008
(51) Int. Cl.: G06K 7/00, G06K 7/12

(54) **OPTICAL RECOGNITION CODE RECOGNIZED RESULT DISPLAYING METHOD**

(30) Priority: 29.05.2007 JP 2007142145
(71) Applicant: B-Core Inc., Tokyo 101-0065 (JP)
(72) Inventor: KIMURA, Akiteru, Tokyo 101-0065 (JP)
(74) Representative: TBK-Patent
(86) International application number: PCT/JP2008/058518
(87) International publication number: WO 2008/146580

(57) **Abstract**

A method for displaying the result in an improved manner in the case of collectively reading in and recognizing a plurality of 1D color bit codes is provided.

A "recognized data" as a result of recognizing a code symbol and a "corresponding pattern specific display" indicating the successfully recognized code symbol are displayed in such a manner as superimposed on the original image. The recognized data is a data successfully recognized from the code symbol. The corresponding pattern specific display is a graphic pattern for indicating a finally successfully recognized code symbol, such as a rectangular frame (utilizing a conspicuous color, e.g., orange and the like), etc.. By virtue of such a display, the operator is able to know which code symbol was recognized and what the recognition result is, and thereby a highly convenient optical recognition code recognizer and method can be obtained.

## Description

### Technical Field

The present invention relates to a technology of optically reading in a plurality of optical recognition codes (also called automatic recognition code tags), collectively recognizing the read-in codes, finding out a target code symbol(s) (also called a tag), and displaying the result to the operator in an easy-to-understand manner. That is, the present invention relates to a technology of optically reading out and decoding optical recognition codes.

### Background Art

A variety of optically recognizable codes are known. The so-called barcodes are among the well-known optical recognition codes. In application of the barcodes, however, there has not been known so far a technology of reading in a plurality of barcodes at a time and collectively recognizing the read-in barcodes.

The reason is that the conventional barcodes are under the influence of distorted or blurred images, and the cutout processing for detecting the existence of barcodes depends on shape recognition, thereby requiring a great number of processes.

As a result, there has not been so far a method available for collectively reading out a plurality of code symbols, and collectively performing the recognition in an easy operational manner and through a simple image processing. Needless to say, neither ideas nor means have ever been taken into consideration for displaying the recognition results to the operator in an easy-to-understand manner after reading out the code symbols (tags).

Further, there has not been known either a significant technology with respect to reading out and collectively recognizing a plurality of code symbols, easily finding out and clearly specifying the target code symbols, and displaying the results to the operator.

In view of the above circumstances, the inventors have proposed in the former Japanese Patent Application No. 2006-196705 an optical recognition code denoting information by virtue of color transition and/or change. This optical recognition code is called "1D color bit code". According to the 1D color bit code, restrictions on size and shape of areas each color occupies are eased and thereby the optical recognition code can even be marked on concave-convex surfaces and/or flexible materials.

An outline of reading out a 1D color bit code (three colors) is as follows.

(1) First, an image of a certain region including a 1D color bit code (s) is taken into photographing means such as a CCD camera or the like.

(2) Next, four values are assigned to the image (which is classified into four color phases) . The 1D color bit code is read out by tracing the color phase region of the image to which four values are assigned.

The inventors have already applied for another patent (Japanese Patent Application No. 2007-130504) with the details of such reading process.

As such, 1D color bit codes are recognized by reading in and processing the image of a certain region. Herein, there may be a plurality of 1D color bit codes included in the region. Therefore, these 1D color bit codes will be recognized and decoded respectively. That is, the 1D color bit code developed by the inventors is essentially such a code as is easy to read out and recognize in a plural manner.

### Conventional related proprietary technologies

For example, the following Patent Document 1 discloses a cutout method able to easily cut barcodes out of characters and/or images.

Further, the following Patent Document 2 discloses a method of printing barcodes comprising a great amount of information in a small space, characterized, in particular, by utilizing barcodes cut out as a set of minor arcs with a central angle θ.

Further, the following Patent Document 3 discloses an apparatus for reading out two-dimensional barcodes; and in particular discloses a technology characterized by switching decoding means in accordance with the image qualities.

Furthermore, the following Patent Document 4 discloses a barcode cutout method able to read out a plurality of barcodes. According to the technology disclosed herein, it is possible to continuously recognize even those with irregular left and/or right margins, thereby being able to cut out a plurality of barcodes.

Patent Document 1
   Japanese Unexamined Patent Application Publication No. 2005-266907.
Patent Document 2
   Japanese Unexamined Patent Application Publication No. 2005-193578.
Patent Document 3
   Japanese Unexamined Patent Application Publication No.
   08-305785.
Patent Document 4
   Japanese Unexamined Patent Application Publication No. 08-185463.

### Disclosure of the Invention

As such, 1D color bit codes are suitable for recognizing at a time a plurality of 1D color bit codes included in a single image.

However, there has been not yet known such a display method as the recognized are distinguished from the unrecognized in recognizing a plurality of 1D color bit codes.

As a result, when a plurality of 1D color bit codes (e.g., 10) were recognized at a time, if the result shows that nine are obtained, it is obvious that one could not be read out, yet it is unobvious that specifically which code could not be recognized. Therefore, it remains unknown that which optical recognition code should be read again, thereby having to make a choice between keeping reading until everything is successfully read out and giving it up to reading one-by-one separately.

Objects of the present invention In view of the above problems, an object of the present invention is to provide a method for displaying the results in an improved manner in the case of collectively reading in and recognizing a plurality of 1D color bit codes.

Another object of the present invention is to accomplish a technology able to search for a color bit code of a desired value.

Yet another object of the present invention is to provide a method for displaying the results in an improved manner in the case of utilizing RFID tags in combination with the 1D color bit codes.

### Means for Solving the Problems

(1) In order to solve the above problems, the present invention provides an optical recognition code recognizer capturing an image including a code symbol that is a symbol of an optical recognition code and decoding a data denoted by the code symbol from an obtained original image, the recognizer comprising: a corresponding pattern specific display creating means for creating a "corresponding pattern specific display" indicating the code symbol; and a displaying means for displaying the created corresponding pattern specific display superimposed on the original image.

(2) Further, in order to solve the above problems, the present invention provides an optical recognition code recognizer capturing an image including a code symbol that is a symbol of an optical recognition code and decoding a data denoted by the code symbol from an obtained original image, the recognizer comprising: a recognizing means for decoding a data denoted by the code symbol; a recognized data display creating means for creating an image denoting the data in association with the code symbol from which the data is recognized; and a displaying means for displaying the created recognized data display superimposed on the original image.

### About "association"

In addition, "association" means "to know the data as of the code symbol", and typically refers to displaying the data more adjacent to the code symbol than other data displays. However, the display does not have to be adjacent to the code symbol as long as the data can be known of which code symbol, such as utilizing a lead line and the like.

Hereinafter, in this document, the word "association" will be used in this sense.

(3) Further, the optical recognition code recognizer according to the description of (1), further comprising: a recognizing means for decoding a data denoted by the code symbol; a recognized data display creating means for creating an image denoting the data in association with the corresponding pattern specific display of the code symbol from which the data is recognized; and a displaying means for displaying the created recognized data display superimposed on the original image.

(4) Further, in order to solve the above problems, the present invention provides an optical recognition code recognizer capturing an image including a plurality of code symbols each of which is a symbol of an optical recognition code and decoding each data denoted by each code symbol from an obtained original image, the recognizer comprising: a corresponding pattern specific display creating means for creating a "corresponding pattern specific display" indicating the code symbol; and a displaying means for displaying the created corresponding pattern specific display superimposed on the original image.

(5) Further, in order to solve the above problems, the present invention provides an optical recognition code recognizer capturing an image including a plurality of code symbols each of which is a symbol of an optical recognition code and decoding each data denoted by each code symbol from an obtained original image, the recognizer comprising: a recognizing means for decoding a data denoted by the code symbol; a recognized data display creating means for creating an image denoting the data in association with the code symbol from which the data is recognized; and a displaying means for displaying the created recognized data display superimposed on the original image.

(6) Further, the optical recognition code recognizer according to the description of (4), further comprising: a recognizing means for decoding a data denoted by the code symbol; a recognized data display creating means for creating an image denoting the data in association with the corresponding pattern specific display of the code symbol from which the data is recognized; and a displaying means for displaying the created recognized data display superimposed on the original image.

(7) Further, the optical recognition code recognizer according to any one of the descriptions of (1) to (6), further comprising: a nonconforming pattern display creating means for creating a nonconforming pattern display indicating an un-decodable region of a plurality of serial color areas in the original image; and a displaying means for displaying the nonconforming pattern display superimposed on the original image.

(8) Further, the optical recognition code recognizer according to the description of (7), wherein the nonconforming pattern image nonconforms to any of a preset cell alignment rule, cell number rule and cell alignment numerical rule, and conforms to any or all of a preset cell alignment quasi rule, cell number quasi rule and cell alignment numerical quasi rule.

(9) Further, in order to solve the above problems, the present invention provides an optical recognition code recognizer capturing an image including a code symbol that is a symbol of an optical recognition code, decoding a data denoted by the code symbol from an obtained original image, and checking whether a decoded result conforms to a search object data, the recognizer comprising: a recognizing means for decoding a data denoted by the code symbol; a checking means for checking whether the decoded result conforms to the search object data; a corresponding pattern specific display creating means for creating a "target corresponding pattern specific display" indicating the code symbol when the check result shows that the decoded result conforms to the search object data; and a displaying means for displaying the created corresponding pattern specific display superimposed on the original image.

(10) Further, the optical recognition code recognizer according to the description of (9), wherein the corresponding pattern specific display creating means creates a nontarget corresponding pattern specific display indicating the code symbol when the check result shows that the decoded result nonconforms to the search object data; the nontarget corresponding pattern specific display being different from the target corresponding pattern specific display.

(11) Further, the optical recognition code recognizer according to any one of the descriptions of (1) to (6), further comprising: an RFID reading means for reading out an RFID tag value; and a comparing means for comparing the data decoded from the code symbol with the data read out by the RFID reading means, wherein the corresponding pattern specific display creating means creates different corresponding pattern specific displays between the cases that the data decoded from the code symbol conforms and nonconforms to the data read out by the RFID reading means.

Herein, as long as the so-called RFID tag is a tag communicating through radio waves, any kind of the tags may be applied, such as tags at times also referred to as wireless tags, IC tags and the like. In this document, the term "RFID tag" is used in this sense.

(12) Further, the optical recognition code recognizer according to any one of the descriptions of (1) to (6), further comprising: an RFID reading means for reading out an RFID tag value; and a comparing means for comparing the data decoded from the code symbol with the data read out by the RFID reading means, wherein the recognized data display creating means creates different recognized data displays between the cases that the data decoded from the code symbol conforms and nonconforms to the data read out by the RFID reading means.

(13) Further, in order to solve the above problems, the present invention provides an optical recognition code recognizing method capturing an image including a code symbol that is a symbol of an optical recognition code and decoding a data denoted by the code symbol from an obtained original image, the method comprising the steps of: (a13) creating a "corresponding pattern specific display" indicating the code symbol; and (b13) displaying the created corresponding pattern specific display superimposed on the original image.

(14) Further, in order to solve the above problems, the present invention provides an optical recognition code recognizing method capturing an image including a code symbol that is a symbol of an optical recognition code and decoding a data denoted by the code symbol from an obtained original image, the method comprising the steps of: (a14) decoding a data denoted by the code symbol; (b14) creating a recognized data display by creating an image denoting the data in association with the code symbol from which the data is recognized; and (c14) displaying the created recognized data display superimposed on the original image.

(15) Further, the optical recognition code recognizing method according to the description of (13), further comprising the steps of: (a15) decoding a data denoted by the code symbol; (b15) creating a recognized data display by creating an image denoting the data in association with the corresponding pattern specific display of the code symbol from which the data is recognized; and (c15) displaying the created recognized data display superimposed on the original image.

(16) Further, in order to solve the above problems, the present invention provides an optical recognition code recognizing method capturing an image including a plurality of code symbols each of which is a symbol of an optical recognition code and decoding each data denoted by each code symbol from an obtained original image, the method comprising the steps of: (a16) creating a "corresponding pattern specific display" indicating the code symbol; and (b16) displaying the created corresponding pattern specific display superimposed on the original image.

(17) Further, in order to solve the above problems, the present invention provides an optical recognition code recognizing method capturing an image including a plurality of code symbols each of which is a symbol of an optical recognition code and decoding each data denoted by each code symbol from an obtained original image, the method comprising the steps of: (a17) decoding a data denoted by the code symbol; (b17) creating a recognized data display by creating an image denoting the data in association with the code symbol from which the data is recognized; and (c17) displaying the created recognized data display superimposed on the original image.

(18) Further, the optical recognition code recognizing method according to the description of (16), further comprising the steps of: (a18) decoding a data denoted by the code symbol; (b18) creating a recognized data display by creating an image denoting the data in association with the corresponding pattern specific display of the code symbol from which the data is recognized; and (c18) displaying the created recognized data display superimposed on the original image.

(19) Further, the optical recognition code recognizing method according to any one of the descriptions of (13) to (18), further comprising the steps of: (a19) creating a nonconforming pattern display indicating an un-decodable region of a plurality of serial color areas in the original image; and (b19) displaying the nonconforming pattern display superimposed on the original image.

(20) Further, the optical recognition code recognizing method according to the description of (19), wherein the nonconforming pattern image nonconforms to any of a preset cell alignment rule, cell number rule and cell alignment numerical rule, and conforms to any or all of a preset cell alignment quasi rule, cell number quasi rule and cell alignment numerical quasi rule.

(21) Further, in order to solve the above problems, the present invention provides an optical recognition code recognizing method capturing an image including a code symbol that is a symbol of an optical recognition code, decoding a data denoted by the code symbol from an obtained original image, and checking whether a decoded result conforms to a search object data, the method comprising the steps of: (a21) decoding a data denoted by the code symbol; (b21) checking whether the decoded result conforms to the search object data; (c21) creating a "target corresponding pattern specific display" indicating the code symbol when the check result shows that the decoded result conforms to the search object data; and (d21) displaying the created target corresponding pattern specific display superimposed on the original image.

(22) Further, the optical recognition code recognizing method according to the description of (21), wherein step (c21) creates a nontarget corresponding pattern specific display indicating the code symbol when the check result shows that the decoded result nonconforms to the search object data; the nontarget corresponding pattern specific display being different from the target corresponding pattern specific display.

(23) Further, the optical recognition code recognizing method according to any one of the descriptions of (13) to (18), further comprising the steps of: (a23) reading out an RFID tag value; and (b23) comparing the data decoded from the code symbol with the data read out in step (a23), wherein different corresponding pattern specific displays are created in the step of creating the corresponding pattern specific display between the cases that the data decoded from the code symbol conforms and nonconforms to the data read out in step (a23).

(24) Further, the optical recognition code recognizing method according to any one of the descriptions of (13) to (18), further comprising the steps of: (a24) reading out an RFID tag value; and (b24) comparing the data decoded from the code symbol with the data read out in step (a24), wherein different recognized data displays are created in the step of creating the recognized data display between the cases that the data decoded from the code symbol conforms and nonconforms to the data read out in step (a24).

(25) Further, in order to solve the above problems, the present invention provides a program activating a computer as an optical recognition code recognizer capturing an image including a code symbol that is a symbol of an optical recognition code and decoding a data denoted by the code symbol from an obtained original image, the program setting the computer to execute the procedures of: (a25) creating a "corresponding pattern specific display" indicating the code symbol; and (b25) displaying the created corresponding pattern specific display superimposed on the original image.

(26) Further, in order to solve the above problems, the present invention provides a program activating a computer as an optical recognition code recognizer capturing an image including a code symbol that is a symbol of an optical recognition code and decoding a data denoted by the code symbol from an obtained original image, the program setting the computer to execute the procedures of: (a26) decoding a data denoted by the code symbol; (b26) creating a recognized data display by creating an image denoting the data in association with the code symbol from which the data is recognized; and (c26) displaying the created recognized data display superimposed on the original image.

(27) Further, the program according to the description of (25), further setting the computer to execute the procedures of: (a27) decoding a data denoted by the code symbol; (b27) creating a recognized data display by creating an image denoting the data in association with the corresponding pattern specific display of the code symbol from which the data is recognized; and (c27) displaying the created recognized data display superimposed on the original image.

(28) Further, in order to solve the above problems, the present invention provides a program activating a computer as an optical recognition code recognizer capturing an image including a plurality of code symbols each of which is a symbol of an optical recognition code and decoding each data denoted by each code symbol from an obtained original image, the program setting the computer to execute the procedures of: (a28) creating a "corresponding pattern specific display" indicating the code symbol; and (b28) displaying the created corresponding pattern specific display superimposed on the original image.

(29) Further, in order to solve the above problems, the present invention provides a program activating a computer as an optical recognition code recognizer capturing an image including a plurality of code symbols each of which is a symbol of an optical recognition code and decoding each data denoted by each code symbol from an obtained original image, the program setting the computer to execute the procedures of: (a29) decoding a data denoted by the code symbol; (b29) creating a recognized data display by creating an image denoting the data in association with the code symbol from which the data is recognized; and (c29) displaying the created recognized data display superimposed on the original image.

(30) Further, the program according to the description of (28), further setting the computer to execute the procedures of: (a30) decoding a data denoted by the code symbol; (b30) creating a recognized data display by creating an image denoting the data in association with the corresponding pattern specific display of the code symbol from which the data is recognized; and (c30) displaying the created recognized data display superimposed on the original image.

(31) Further, the program according to any one of the descriptions of (25) to (30), further setting the computer to execute the procedures of: (a31) creating a nonconforming pattern display indicating an un-decodable region of a plurality of serial color areas in the original image; and (b31) displaying the nonconforming pattern display superimposed on the original image.

(32) Further, the program according to the description of (31), wherein the nonconforming pattern image nonconforms to any of a preset cell alignment rule, cell number rule and cell alignment numerical rule, and conforms to any or all of a preset cell alignment quasi rule, cell number quasi rule and cell alignment numerical quasi rule.

(33) Further, in order to solve the above problems, the present invention provides a program activating a computer as an optical recognition code recognizer capturing an image including a code symbol that is a symbol of an optical recognition code, decoding a data denoted by the code symbol from an obtained original image, and checking whether a decoded result conforms to a search object data, the program setting the computer to execute the procedures of: (a33) decoding a data denoted by the code symbol; (b33) checking whether the decoded result conforms to the search object data; (c33) creating a "target corresponding pattern specific display" indicating the code symbol when the check result shows that the decoded result conforms to the search object data; and (d33) displaying the created target corresponding pattern specific display superimposed on the original image.

(34) Further, the program according to the description of (33), wherein procedure (c33) creates a nontarget corresponding pattern specific display indicating the code symbol when the check result shows that the decoded result nonconforms to the search object data; the nontarget corresponding pattern specific display being different from the target corresponding pattern specific display.

(35) Further, the program according to any one of the descriptions of (25) to (30), further setting the computer to execute the procedures of: (a35) reading out an RFID tag value; and (b35) comparing the data decoded from the code symbol with the data read out in procedure (a35), wherein the procedure of creating the corresponding pattern specific display creates different corresponding pattern specific displays between the cases that the data decoded from the code symbol conforms and nonconforms to the data read out in procedure (a35).

(36) Further, the program according to any one of the descriptions of (25) to (30), further setting the computer to execute the procedures of: (a36) reading out an RFID tag value; and (b36) comparing the data decoded from the code symbol with the data read out in procedure (a36), wherein the procedure of creating the recognized data display creates different recognized data displays between the cases that the data decoded from the code symbol conforms and nonconforms to the data read out in procedure (a36) .

### Advantages

As described above, according to the present invention, when code symbols are read, the display indicating the successfully read-out code symbol is superimposed on the original image, thereby being able to easily know which code symbol has been read out.

Further, according to the present invention, a decoded value of the successfully read-out code symbol is displayed in such a manner as superimposed on the original image, thereby being able to easily know the data denoted by the code symbol.

Further, according to the present invention, an optical recognition code of a desired value can be efficiently searched for.

Furthermore, according to the present invention, it is possible to efficiently know the recognition result in the case of utilizing RFID tags in combination with optical recognition codes.

### Brief Description of Drawings

Fig. 1 is a conceptual configuration diagram of an optical recognition code recognizer in accordance with an embodiment of the present invention;
Fig. 2 is a functional block diagram of a computer;
Fig. 3 is another functional block diagram of the computer;
Fig. 4 is yet another functional block diagram of the computer;
Fig. 5 is a flowchart describing behaviors in creating a nonconforming pattern display;
Fig. 6 is a diagram describing a four-value assignment, and a color cone showing an HSV color notation;
Fig. 7 is an explanatory diagram showing a result of a scene 20 photographed and four values assigned thereto;
Fig. 8 is an explanatory diagram showing regions, marked with "x", not becoming candidates;
Fig. 9 is an explanatory diagram showing regions, marked with "Δ", excluded from the candidates as a result of area number (cell number) check;
Fig. 10 is an explanatory diagram showing regions, marked with "□", excluded from the candidates as a result of component cell validity check;
Fig. 11 is an explanatory diagram showing an example of displaying "corresponding pattern specific display"; and
Fig. 12 is an explanatory diagram showing an example of displaying "corresponding pattern specific display" and "nonconforming pattern display".

### Reference Numerals

- 10: Optical recognition code recognizer
- 12: Camera means
- 14: Computer
- 14a: Recognizing means
- 14b: Corresponding pattern specific display creating means
- 14c: Recognized data display creating means
- 14d: Compositing means
- 16: Displaying means
- 20: Scene
- 44a: Recognizing means
- 44b: Corresponding pattern specific display creating means
- 44c: Recognized data display creating means
- 44d: Compositing means

### Best Mode for Carrying Out the Invention

Hereinafter, referring to the drawings, a preferred embodiment of a method for displaying a recognition result of 1D color bit codes in accordance with the present invention will be described in detail.

### Part one: Definition of 1D color bit code

Now, the inventors have developed a 1D color bit code denoting a data by means of color transition and/or color combination. Herein, a definition of 1D color bit code will be described. A 1D color bit code,
I. is an alignment of areas (cells) of predetermined colors (="cell alignment");
II. utilizes a plurality of colors, wherein a certain color is affixed to a certain cell;
III. is such that the cells are not included in each other. That is, a cell does not include another cell;
IV. is such that the cell number for forming the alignment is a preset number (or a number within a preset range); and
V. is such that contiguous cells must be provided with different colors but not with a same color.
   A 1D color bit code is formed in such a manner as is based on the above conditions.

The embodiment will be described through an example of utilizing 1D color bit codes.

### Part two: An outline of a process for recognizing 1D color bit codes

First, 1D color bit codes are recognized in such a manner as first digitizing an image by means of optical input means such as CCD cameras and then processing the image data. Further, a single 1D color bit code is called a "code symbol"; at times also referred to as a "tag" from its functional aspect. In this document, the term "code symbol" is used. Further, a single code symbol is formed by a predetermined number of series color areas (called "cells" as described above).

Now, a plurality of code symbols are read out in the same manner as a single code symbol is, by photographing an image including the plurality of code symbols, which are thereby contained in a digital image, from which each data of each code symbol can be recognized.

Therefore, when an operator tries to read out a plurality of code symbols, first, an image including the plurality of code symbols (referred to as code symbol image or original image) are to be photographed. Then, the finally read-out data and the code symbol image are to be correspondingly recognized.

This is obvious from the algorithm behavior of cutting out each code symbol (1D color bit code) one by one from the code symbol image and recognizing the each. In addition, the inventors have applied for another patent (Japanese Patent Application No. 2007-130504) with this algorithm.

This means, in a word, a principle that in order to read a plurality of code symbols, if an image including the plurality of code symbols (code symbol image) is photographed, the code symbol image will correspond to the recognized data in a one-to-one manner.

Therein, the inventors have newly developed a mechanism for the operator to intuitively know which code symbol has been recognized and what the result (recognized data) is, by displaying:
I. the read-out data (called recognized data); and
II. a corresponding pattern specific display indicating the successfully read-out code symbol, superimposed on the corresponding code symbol image. Hereinafter, the mechanism will be described concretely.

### Part three: Display of the readout result of code symbols (recognition result)

A characteristic of the embodiment is to display the code symbol data that are the result of collectively recognizing a plurality of code symbols (also called recognized data) and the data indicating successfully recognized code symbols (corresponding pattern specific display) superimposed on the code symbol image.

In the embodiment, the following data are utilized to display in such a manner as superimposed on the code symbol image.

(1) Recognized data: data successfully recognized from the code symbol.

(2) Corresponding pattern specific display: a graphic pattern for showing a finally recognized code symbol; for example, a rectangular frame (e.g., using a conspicuous color such as orange color and the like) may be utilized.

Now, the corresponding pattern specific display (rectangular frame) is performed by a corresponding pattern specific displaying means. Further, a data displaying means actually displays the data read-out from the code symbol in the vicinity of the corresponding pattern specific display.

By virtue of such behaviors, the operator is able to know which code symbol has been recognized and what the recognition result is, thereby obtaining a highly convenient apparatus and method for recognizing optical recognition codes.

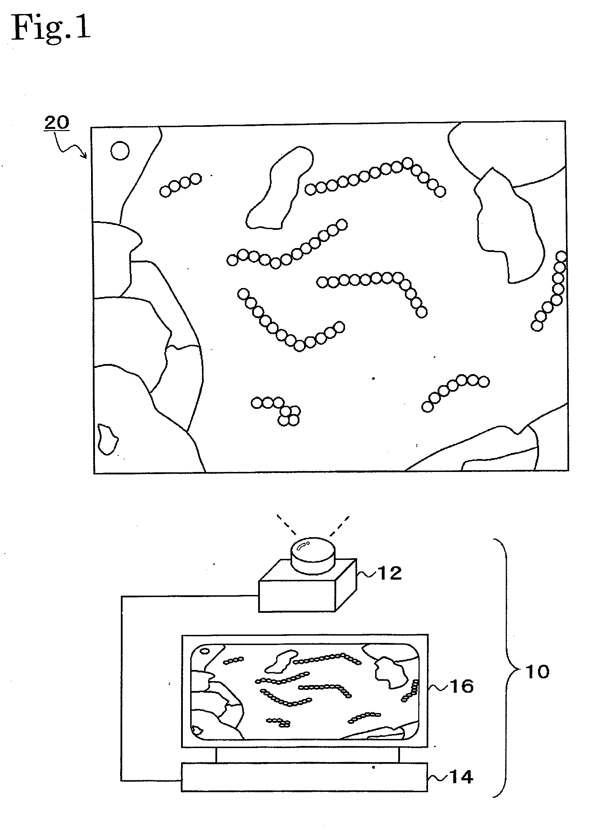

Fig. 1 shows a conceptual configuration diagram of an optical recognition code recognizer utilizing the method for displaying a recognition result in accordance with the embodiment.

As shown in Fig. 1, an optical recognition code recognizer 10 is provided with a camera means 12, which photographs a scene 20 including optical recognition codes. Further, the optical recognition code recognizer 10 is provided with a computer 14 for processing the photographed image, and a displaying means 16 for displaying the read-out code symbol image and recognition result, connected to the computer 14. Other members (not shown), such as a keyboard for the operator to input operating instructions and the like are also provided.

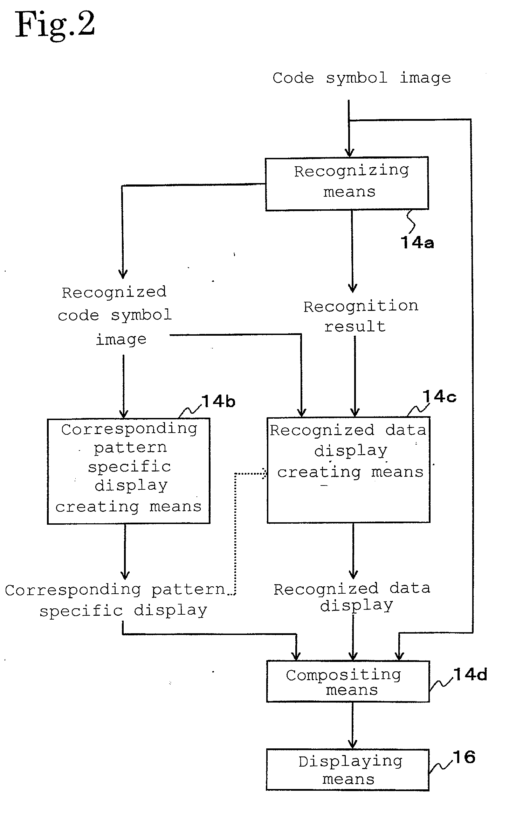

The computer 14 realizes each means as shown in Fig. 2 by executing a program stored in a storing means therein. Fig. 2 shows a functional block diagram of the computer 14.

First, a recognizing means 14a recognizes an optical recognition code based on a code symbol image (original image) and outputs a recognition result, which is commonly a numerical data such as "123456"; yet other characters and symbols are also possible, of course.

A characteristic point in the embodiment exists in that the recognizing means 14a outputs an image showing the region of the successfully recognized optical recognition code (called recognized code symbol image).

Then, a corresponding pattern specific display creating means 14b creates an image of such a rectangular frame as encloses the region of the successfully recognized optical recognition code in the recognized code symbol image. The frame is called corresponding pattern specific display. As will be described later, by displaying the corresponding pattern specific display superimposed on the code symbol image, the operator is able to know that an optical recognition code of which position was recognized. Generally speaking, it is preferable to display the frame in a conspicuous color, e.g., orange, green, yellow and the like.

In addition, since creating a rectangle enclosing a specific region is well-known in image processing, it should be easy for a person skilled in the art to program for creating such a rectangle. Further, any graphic form and/or display are applicable as long as able to indicate the region.

Further, a recognized data display creating means 14c creating an image displaying the recognition result "123456" in the vicinity of the region of the successfully recognized optical recognition code denoting the recognition result "123456" based on the information such as the recognition result "123456", etc., and the recognized code symbol image. Such "123456" in an image form is called a recognized data display.

The recognized data display creating means 14c determines where to locate the "vicinity" based on the recognized code symbol image. For example, since the region of the recognized code symbol is knowable from the recognized code symbol image, it is preferred to take such positions as below the lower edge of the region at a predetermined distance therefrom.

In addition, in the embodiment, the recognized data is created in such a manner as to display in the "vicinity" of the region of the optical recognition code. However, it is also preferable to be created in such a manner as to display in the vicinity of (in association with) the corresponding pattern specific display. For example, when the corresponding pattern specific display is rectangular, it is also preferable to create the recognized code in such a manner as to be displayed parallel to one side of the rectangle. In such case, the corresponding pattern specific display is supplied to the recognized data display creating means 14c. Further, such unification in direction is also a preferred example of "association" set forth in the claims.

Then, a compositing means 14d creates an image for finally displaying to the operator by superimposing the corresponding pattern specific display and recognized data display on the code symbol image.

A displaying means 16 displays the finally created image to the operator.

With such a configuration, the operator is thus able to:
I. easily specify the successfully recognized code symbol from the code symbol image by virtue of the corresponding pattern specific display (frame);

II. easily know the value of the data read out from the code symbol by virtue of the recognized data display.

Consequently, not only just a "read-out value" of a read-out code symbol is known, but also the read-out code symbol can be easily recognized visually.

### Part 3-2: Corresponding pattern specific display

Now, in the above example, the "corresponding pattern specific display" utilizes a rectangle enclosing the code symbol, e.g., an orange rectangular frame. However, any kind of display is applicable as long as the code symbol can be indicated, such as green, red and the like. Again for example, such a display is also preferable as changes the color of the vicinity of the relevant code symbol. Further, it is also preferred to utilize marks such as arrow marks and the like indicating the relevant code symbol.

### Part 3-3: Recognized data

Further, in the above example, in order to show the "recognized data", an image denoting the data (e.g., 123456 in an image form) is displayed in the vicinity of the corresponding pattern specific display. Then, it is preferred that the "corresponding pattern specific display" indicating the code symbol conform to the image of the recognized data in color and line type, which is thereby easy to understand and easy for the operator to read out with the unaided eye.

For example, if the corresponding pattern specific display is an orange rectangular frame, it is preferable to display the data such that the numerical characters are of the same thickness and orange color as the frame of the corresponding pattern specific display.

As such, if the data display is of the same thickness and color as the corresponding pattern specific display, the unaided eye will be given a sense of unity, and the operator can be clearly informed of an additional and assistant data display not available in the original code symbol image.

### Part 3-4: Others

In addition, the recognized data display described above, is displayed for each recognized optical recognition code. Further, in the same manner, the corresponding pattern specific display is also displayed for each recognized optical recognition code.

That is, when a plurality of optical recognition codes are included in a code symbol image, through reading out and recognizing these codes, "a plurality of" recognized data displays and "a plurality of" corresponding pattern specific displays are displayed in such a manner as superimposed on the code symbol image. When there is only one optical recognition code, of course, only a single of the above will be displayed respectively.

### Part 4: Searching for a target code symbol

In Part 3, the recognition result indicating whether each code symbol included in the code symbol image was read out or not, and the data successfully read-out are displayed in such a manner as superimposed on the code symbol image; hence it is easy to know whether the code symbol was successfully read out, and easy to recognize the data of the successfully read-out code symbol.

Yet, if this principle is utilized in an opposite manner, it is also possible to accomplish a mechanism for searching for the code symbol of a data having the value of "1234".

When such a "search" is put into practice, only in the case that a recognized data from among the code symbols in the code symbol image conforms to a predetermined data (e.g., "1234"), a target code symbol (only) is presented to the operator through such a process as the "corresponding pattern specific displaying means" performs the corresponding pattern specific display and the "data displaying means" displays the read-out data (code symbol data) of the target code symbol (conforming to the predetermined data).

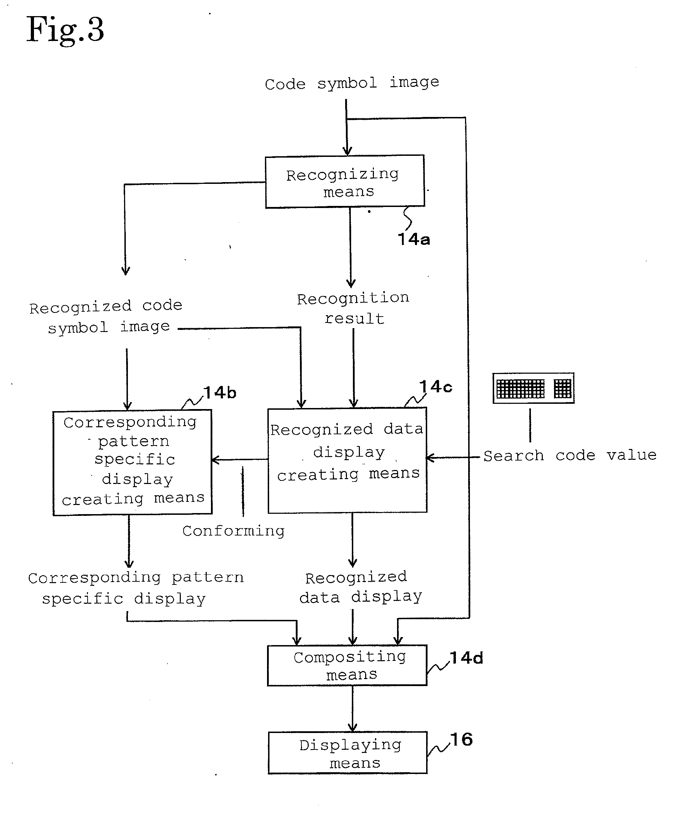

Fig. 3 shows a functional block diagram of the computer 14 in this case. As shown in Fig. 3, the functional block diagram of the computer 14 in this case is almost the same as Fig. 2 except for the following aspects.

That is, as shown in Fig. 3, the recognized data display creating means 14c is provided beforehand from external with an optical recognition code value of a search object (called search code), stored in a predetermined storing means (not shown) inputted in advance by the operator through inputting means such as a keyboard and the like.

Then, monitoring the recognition result supplied by the recognizing manes 14a, the recognized data display creating means 14c creates a recognized data display and further outputs a message (conforming signal) indicating that the recognition result has conformed to the external only in the case that the recognition result conforms to the search code value. Then, the corresponding pattern specific display creating means 14b creates a corresponding pattern specific display only in the case of being informed of the "conforming" from the recognized data display creating means 14c.

Behaviors of the other means are the same as those of Fig. 2. The compositing means 14d creates an image superimposing the corresponding pattern specific display and recognized data display on the code symbol image. The displaying means 16 displays the created image to the operator.

As the recognized data display (e.g., a predetermined color square frame and the like) is displayed on the display screen, the operator can thereby know that the target optical recognition code has been recognized.

As a result, the operator can find out the desired object from a number of code symbols, thereby being able to correctly search for products, documents and the like.

However, such kind of searching is difficult for wireless tags such as the so-called RFID and the like. That is, a code symbol "1234" may be found in "the vicinity" for a wireless tag, but it is not easy to know specifically of which tag the code symbol is. This is because the nature of the wireless tags only allows the code symbol "1234" to be known in the vicinity of a wireless code symbol reader.

### Part 4-2: Display of the codes that are not of the search object

In the example described above, in the case of "search", only for the target code symbol (code symbol of the search object) were performed "corresponding pattern specific display" and "data display"; however, it is also preferable to change the display between the target code symbol and nontarget code symbols.

For example, when a code symbol is the search object,
I. an orange rectangular frame is adopted for the "corresponding pattern specific display"; and
II. the "data display" is also displayed in orange gothic.

On the other hand, when a code symbol is not the search object,
i. a green rectangular frame is adopted for the "corresponding pattern specific display"; and
ii. the "data display" is also displayed in green Mincho.

And other choices are also conceivable.

Further, when a code symbol is not the search object, it is also preferable to display a dashed rectangular frame for the "corresponding pattern specific display", and a dashed "data display" as well.

At any rate, it is preferable to change the display such that the unaided eye can clearly distinguish whether a code symbol is the search object or not.

When such behaviors are performed, in Fig. 3, in the case that the recognition result does not conform to the search code value, the recognized data display creating means 14c does not non-create a recognized data display but creates a recognized data display different in aspect from that in the conforming case.

For example, as described above, it is conceivable to display in an orange color for the conforming case while in a green color for the nonconforming case, etc.. Further, it is also preferable to configure in such a manner as utilizes solid and dashed lines for the unaided eye to be able to distinguish.

### Part 4-3

Further, a plurality of search code values for the search objects can also be designated. In this case, the recognized data display and the corresponding pattern display are configured such as to be performed when the recognition result conforms to any one of the search code values. Further, since the "recognized data display" of the recognition result (e.g., "1234" and the like) will be displayed on the display screen, the operator can easily know which optical recognition code has been found out of the search objects.

### Part 5: Nonconforming pattern display

Yet, in the process of decoding (recognizing) a code symbol, the code symbol candidates cut out of the code symbols in image processing are to be finally recognized after passing through a number of check steps for checking color alignment conformity, code conformity (to the color cell number and check digit) and the like.

Therefore, even for a finally unrecognizable pattern, it is convenient for the operator to know that at which stage in the check steps the nonconformity is proved.

In the examples described so far, the "corresponding pattern specific display" and "data display" were performed only for the finally recognized code symbols. However, it is preferable to perform a display showing the nonconformity for those proved nonconforming to the conditions through the check steps, too.

The display for such nonconforming patterns is called "nonconforming pattern display" herein. As described in Part 4-2, it is preferable to perform the "nonconforming pattern display" in such a manner as changing colors, displaying dashed rectangular frames and the like. In addition, it is also preferred to display other information as will be described next instead of the "data display".

Further, it is also preferable to adopt different "nonconforming pattern displays" in accordance with different steps wherein nonconformity is proved.

Furthermore, a "nonconforming step display" showing the step wherein nonconformity is proved may be performed instead of the "data display". In such case, the "nonconforming pattern display" (a rectangular frame different in color and the like) may be of one kind only.

Hereinafter, specific behaviors will be described.

For example, when light source environments and/or code symbol conditions are poor, such incidents may happen as the color cell number is less than should be captured, the color is changed when captured, etc., due to the influences such as the distance or angle between the code symbols and the capturing means (cameras and the like), the shadow of light source, and the like. Therefore, it is conceivable enough that in these cases, nonconformity would be proved in some check step during the process of cutting out the code symbol to recognize, thereby failing to reach the stage of data recognition.

In such cases, by manifesting the pattern not decodable because of nonconformity in a certain check step, it will become easy for the operator to determine whether the target code symbol does not exist or the target code symbol does exist but cannot be decoded. Hence, it is possible to provide auxiliary information useful for the operator to perform a higher-precision operation.

### Part 5-1: Configuration

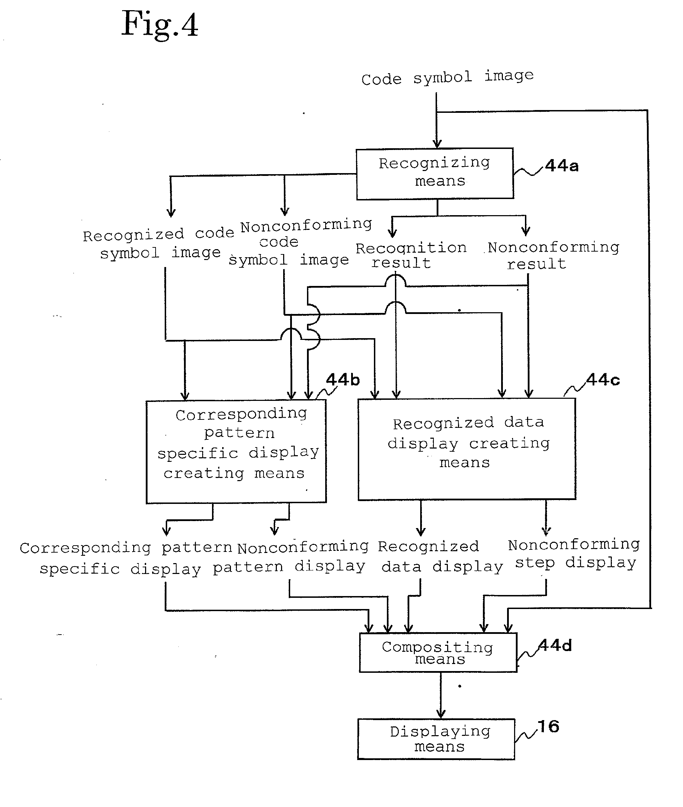

In order to perform such behaviors, the recognizing means 14a needs to output not only the recognition result but also that which drops out of the candidates of the optical recognition codes on the way. Fig. 4 shows a functional block diagram of the computer 14 performing such behaviors.

The functional block diagram shown in Fig. 4 is almost the same as the functional block diagram of Fig. 2 except for the following aspects.

First, a recognizing means 44a outputs not only a "recognition result" but also information with respect to that which could not be recognized. In such case, a "nonconforming result" indicating "did not pass the validity check for component cells" or the like is outputted. This is, actually, the information indicating the not passed check. The nonconforming result facilitates finding out which check (check step) was not passed.

Further, the recognizing means 44a does not output the recognized code symbol image but a "nonconforming code symbol image" when the "nonconforming result" is outputted. The "nonconforming code symbol image" is similar to the "recognized code symbol image", indicating a certain region; yet the image outputted at the same time as the "nonconforming result", is the "nonconforming code symbol image". Of course, the image outputted at the same time as the "recognition result", is the "recognized code symbol image", as shown in the examples described so far.

A corresponding pattern specific display creating means 44b and a recognized data display creating means 44c perform either of the following modes.

### Mode 1

When a nonconforming result is to be outputted, the corresponding pattern specific display creating means 44b creates not only a "corresponding pattern specific display" (orange) but also a "nonconforming pattern display" (green). These "corresponding pattern specific display" and "nonconforming pattern display" are of the same frame graphics, but different in color affixed thereto (orange and green), thereby being configured to be easily recognizable with the unaided eye.

In Mode 1, several kinds (green, blue and yellow) of the nonconforming pattern displays are provided to indicate which check (check step) was not passed with a different color for each check (step). By virtue of these colors, cases of nonconforming to the component cell number, end-point condition, internal check code and the like can be indicated respectively.

Further, in Mode 1, the recognized data display creating means 44c creates a recognized data display based on the recognition result and recognized code symbol image. However, nothing will be outputted when a nonconforming result is outputted.

### Mode 2

In Mode 2, when a nonconforming result is to be outputted, the corresponding pattern specific display creating means 44b creates not only a "corresponding pattern specific display" (orange) but also a "nonconforming pattern display" (green). These "corresponding pattern specific display" (orange) and "nonconforming pattern display" (green) are of the same frame graphics, but different in color affixed thereto (orange and green), thereby being configured to be easily recognizable with the unaided eye. However, the "nonconforming pattern display" (green) does not show any information about which check step was not passed.

On the other hand, in Mode 2, the recognized data display creating means 44c creates a nonconforming step display from the "nonconforming result" and "nonconforming code symbol image". This corresponds to the recognized data display when the data is correctly recognized, so as to display the step not passed in the vicinity of the nonconforming pattern display. For example, "The third check step was not passed" and the like are preferable; yet displays such as "ERROR 3", or more specifically, "Cell number nonconforming", etc., are also preferred.

As described above, Modes 1 and 2 are different only in the "place" of indicating the check step not passed, but the same in the contents to display.

Finally, a compositing means 44d composites the displays created in the above manner with the code symbol image for the display means 16 to display.

In this manner, even for the finally unrecognizable regions, if it is configured to inform the operator of the unrecognized fact, a highly convenient system can be obtained. Further, if which check step the region did not pass is displayed, more detailed information can be obtained, thereby being able to accomplish an optical recognition code recognizer further improved in conveniency.

### Part 5-2: Behaviors

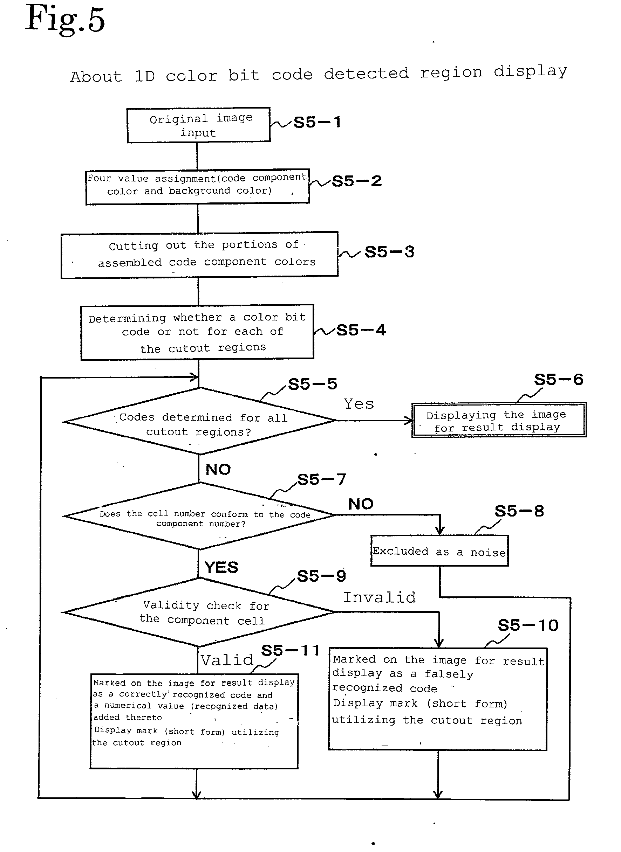

Hereinafter, a behavior example of performing a nonconforming pattern display will be described with reference to a flowchart of Fig. 5.

First, in the step S5-1 of Fig. 5, an original image (code symbol image) is inputted. The image is photographed by the camera means 12, and taken into the computer 14.

Next, in the step S5-2 of Fig. 5, the recognizing means 44a assigns four values to the code symbol image.

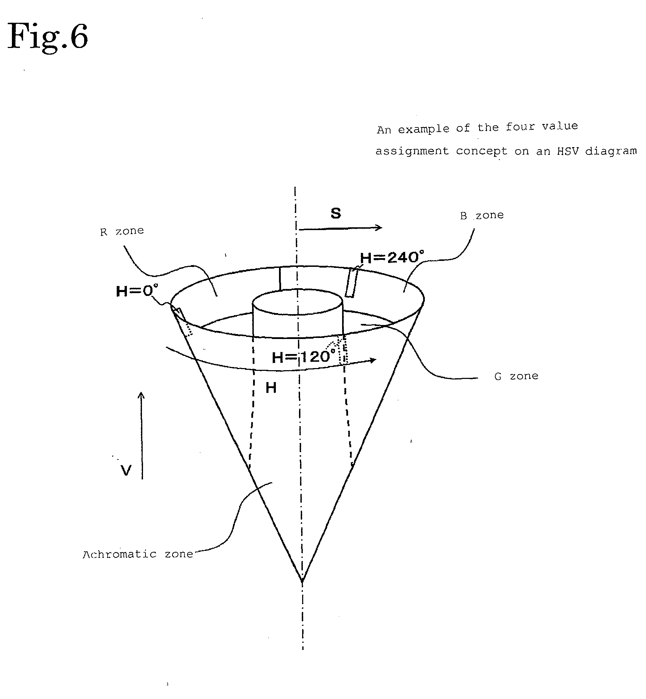

The four values are assigned according to the color phrase of an image data, as shown in Fig. 6, which is a circular cone denoting an HSV color notation. In Fig. 6, the vertical direction represents color value (brightness), the circumferential position (angular position) represents color phrase (hue), and the distance from the center represents the color purity (saturation). After converting each pixel of the code symbol image into the HSV notation, as shown in Fig. 6, for colors with the saturation above a certain value, the vicinity of the angular position at zero degree (H = 0) is considered as R (zone) and all set to R; the vicinity of the angular position at 120 degree (H = 120) is considered as G (zone) and all set to G; and the vicinity of the angular position at 240 degree (H = 240) is considered as B (zone) and all set to B. Other regions, that is, regions with the saturation below a predetermined value are all considered as achromatic colors and converted uniformly into white (W).

Through such processing as above, each pixel in the code symbol image is converted into four colors as R, G, B, and W (four value assignment).

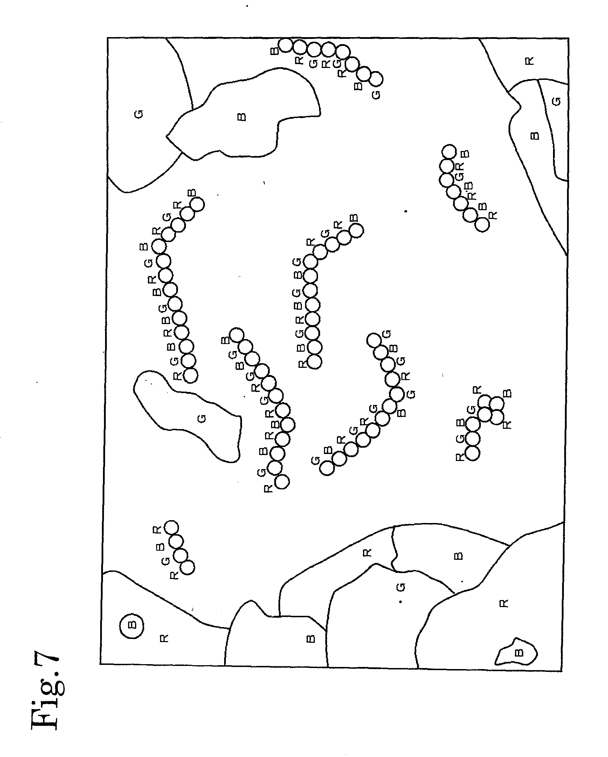

Fig. 7 shows a conversion example wherein the scene 20 is photographed and four values are assigned thereto. In Fig. 7, R represents red, B blue, G green, and W white.

Besides, in the embodiment, R, G and B are called "code component colors for they are colors forming the optical recognition code, while W is called a background color.

Next, in the step S5-3, the recognizing means 44a cuts out the portions of assembled code component colors. Each "assembly" becomes a "candidate" of an optical recognition code. Generally, a number of such "assemblies" exist in a code symbol image. Hereinafter, an assembly region is called a code candidate region.

In addition, conditions for becoming a "candidate" are as follows.

I. Being a group of continuous color areas in series without branching;
II. No color area being completely included in another color area; and
III. Color areas being not less in number than four in series (four cells).

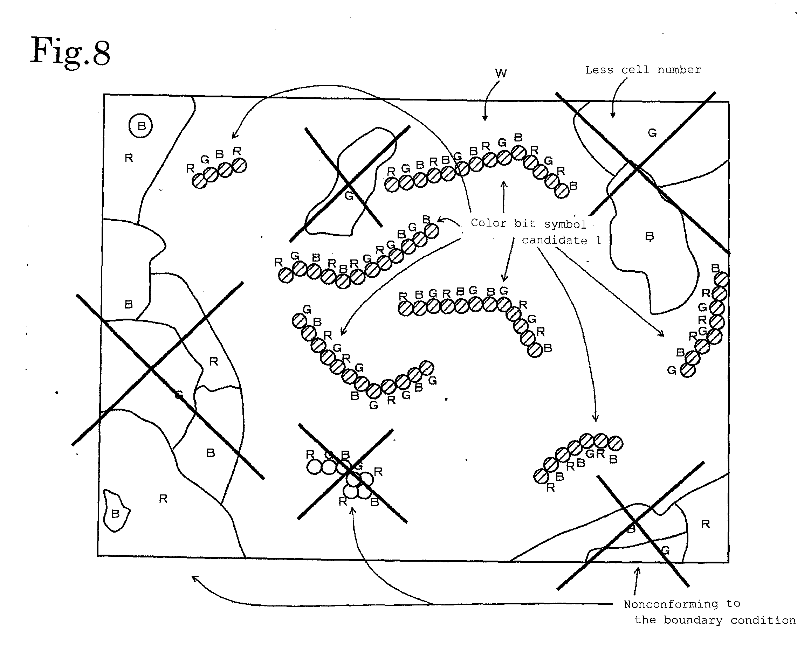

   Fig. 8 shows an example of the appearance, wherein those not meeting the above conditions are marked with "x". Groups without mark "x" are "code candidate regions".

In the step S5-4, the 1D color bit code recognition is started for each code candidate region. The process as will be described below is carried out by the recognizing means 44a.

The step S5-5 determines whether all code candidate regions have been determined. If all done, the process moves on to the step S5-6; if not, it moves on to the step S5-7 to continue the recognition.

In the step S5-6, an image for displaying the final result is displayed by the displaying means 16.

The step S5-7 checks whether the area number of a code candidate region conforms to the cell number of a 1D color bit code. Although the cell number is a predetermined number (10 cells, 20 cells and the like), a predetermined range of numbers (13 to 15 cells) is also applicable (flexible length) other than a single number (fixed length).

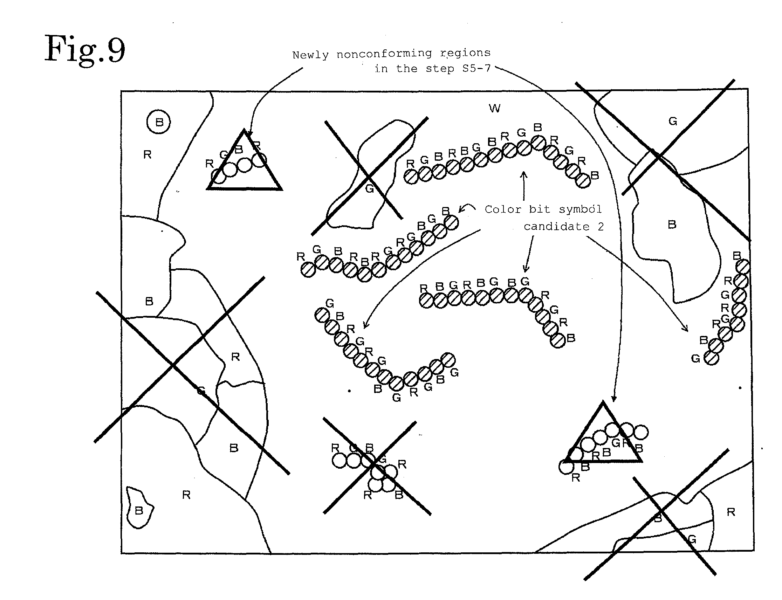

A check result of the area number (cell number) is shown in Fig. 9. In the step S5-7, those newly dropping out of the candidates are marked with "Δ". As a result, in Fig. 9, the code candidate regions are five.

Now, if the check result shows that the area number of the code candidate region nonconforms to the cell number of the 1D color bit code, it is considered as a noise and thus excluded from the code candidate regions, and the process moves on to the step S5-8. On the other hand, if the area number of the code candidate region conforms to the cell number of the 1D color bit code, it is considered continuously as a code candidate region, and the process moves on to the step S5-9 to continue the check process.

In the step S5-8, because the area number is nonconforming, the assembly region is excluded (from the candidates) as a noise. Then, the process moves back to the step S5-5.

In the step S5-9, the validity check for the component cell of the code candidate region is performed. This is to compare the end-point condition of 1D color bit and the combination of usable cell colors with each color area of the code candidate region. If the result meets the 1D color bit requirements, it is finally considered as a correct 1D color bit code, and the process moves on to the step S5-11. On the other hand, if the result is considered as not meeting the end-point condition and the like, the process moves on to the step S5-10.

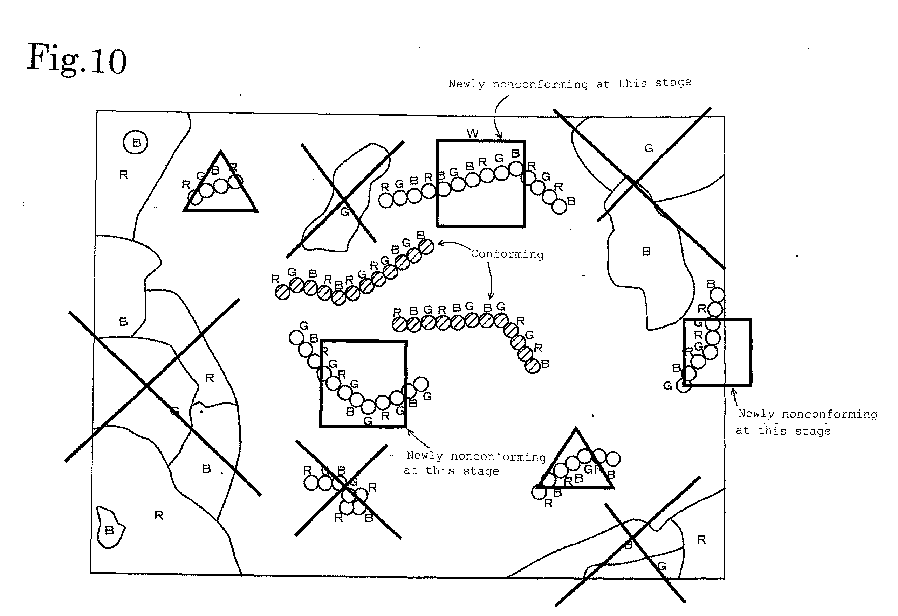

Fig. 10 shows an example of the processing result, wherein the regions newly dropping out of the code candidate regions are marked with "□". As a result, in Fig. 10, the code candidate regions are two.

In the step S5-10, a nonconforming pattern display is created for the code candidate regions finally unrecognizable in the step S5-9 (regions marked with "□" in Fig. 10). Hence, the recognizing means 44a outputs the nonconforming result and the nonconforming code symbol image.

The behaviors when the nonconforming result is outputted, as described afore, are a little different between Modes 1 and 2.

First, in Mode 1, the corresponding pattern specific display creating means 44b creates a "nonconforming pattern display" (green). Herein, the color indicates in which check step the nonconformity is proved. The corresponding pattern specific display creating means 44b decides the color for the nonconforming pattern display based on the contents of the "nonconforming result".

In Mode 1, the recognized data display creating means 44c outputs nothing when a nonconforming result is outputted.

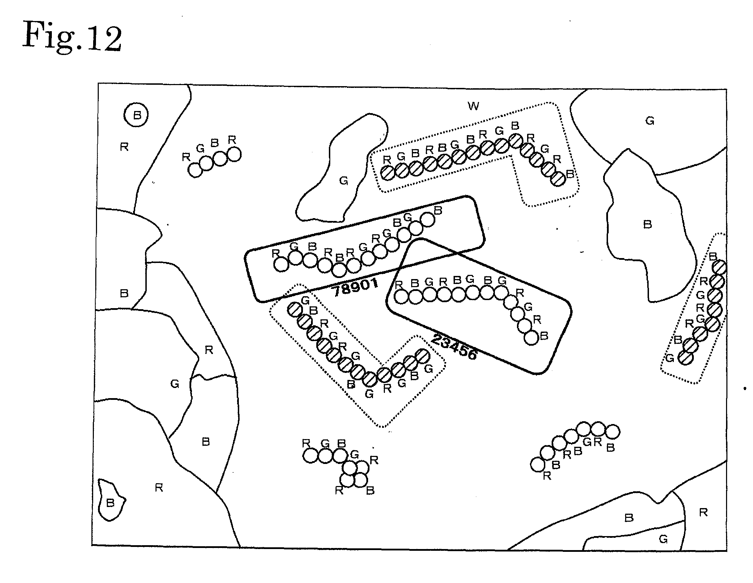

The aftermentioned Fig. 12 shows an example of applying Mode 1.

Next, in Mode 2, the corresponding pattern specific display creating means 44b creates a "nonconforming pattern display" (green) when a nonconforming result is outputted. The nonconforming pattern display is only of one kind (green). On the other hand, in Mode 2, the recognized data display creating means 44c creates a "nonconforming step display" from the "nonconforming result" and "nonconforming code symbol image" to display the not passed step. For example, "The third check step was not passed" and the like are preferable.

Then, the process moves back to the step S5-5.

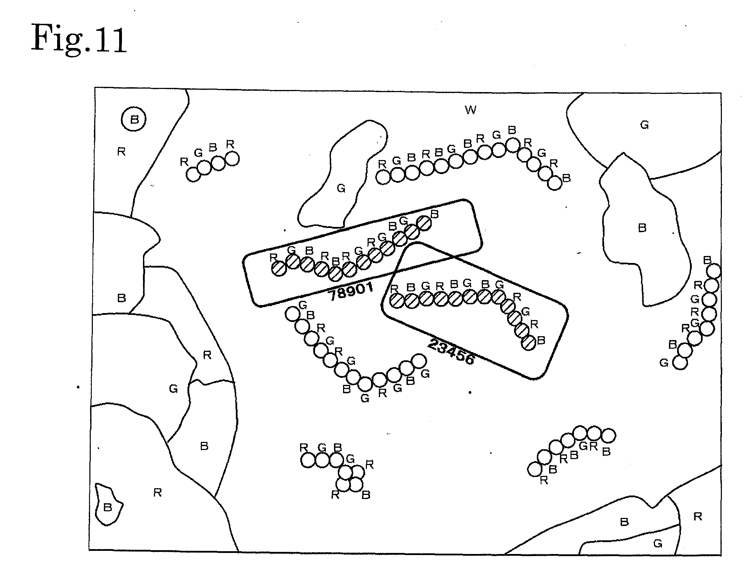

In the step S5-11, similar to Part 3 described afore, the corresponding pattern specific display creating means 44b creates a "corresponding pattern specific display" and the recognized data display means 44c creates a recognized data display. The aftermentioned Figs. 11 and 12 will show examples of the displays.

Then, the process moves back to the step S5-5, which checks whether the obtained regions have all been determined. If the determination for all regions is finished, the process moves on to the step S5-6.

In the step S5-6, the compositing means 44d superimposes the corresponding pattern specific display, nonconforming pattern display, recognized data display and nonconforming step display, created so far, on the original image (code symbol image), and the displaying means 16 displays the composited display. In addition, superimposition of images may also be performed at each time that a display is created.

Fig. 11 shows a display example of only superimposing a corresponding pattern specific display and a recognized data display on the original image (code symbol image). As shown herein, rectangular displays enclosing the finally recognized code symbols (corresponding pattern specific display) are displayed in such a manner as superimposed on the original image (code symbol image).

Further, there are shown data read out in the vicinity of the corresponding pattern specific display such as "78901" and "23456", which are the recognized data displays. In Fig. 11, the recognized data displays are shown in the under portions parallel to the bases of the rectangles.

Further, Fig. 12 shows an example of displaying the nonconforming pattern displays created in the above step S5-10, superimposed on the display of Fig. 11. Similar to the finally recognized code symbols, three area groups (see the regions marked with "□" in Fig. 10) excluded from the code candidate regions for not meeting the condition in the step S5-9, are displayed with dashed rectangles, by virtue of which, the operator can easily know that these three area groups were proved nonconforming in the step S5-9.

Part 5-2: Utilizing the nonconforming pattern display in searching Further, in Part 4, there is described an example of searching for code symbols as specific search objects. In such case, it is also preferable to display the nonconforming pattern display described in Part 5 for the unrecognizable code symbols.

That is,
I. code symbols recognizable and targeted (search objects);
II. code symbols recognizable but nontarget; and
III. code symbols either unrecognizable or nonconforming to the 1D code symbol condition,
   are differentiated and displayed in different manners. As a result, it can be clearly known whether the code symbols were search objects or not, and nonconforming or not.

For example,
I. for a recognizable but nontarget code symbol, the "corresponding pattern display" is displayed in a different color (e.g., green) from the target code symbol (orange).

II. to a code symbol either unrecognizable or nonconforming to the ID code symbol condition, the nonconforming pattern display of dashed rectangle is applied.

By virtue of the above configurations, it is possible to perform a highly convenient display.

### Part 6: In combination use with RFID tags

(1) It is also preferable to use 1D color bit codes in combination with RFID tags (also referred to as wireless tags, RFIDs and the like at times).

(2) As is already known, RFID tags utilize radio waves for readers to read out predetermined digital data, and are among the automatic recognition code symbols applicable to ID control for articles by tagging each article.

A characteristic of the RFID tag exists in that a plurality of the tags can be read out simultaneously even at such a position as becoming a hidden shadow from the reader by virtue of the mechanism of reading out data through radio waves.

Therefore, RFID tags are commonly not assumed to be recognized with the unaided eye. This means, as a result, that when the data cannot be read out, because the tag cannot be recognized with the unaided eye, the existence of the RFID tag, that is, the existence of the article itself tagged with the RFID tag will not be able to be recognized.

In other words, when the data of an RFID tag cannot be read out, either
(a) radio interference, etc.; or
(b) nonexistence of the (article tagged with) RFID tag is responsible. However, it is usually difficult to know which.

On the other hand, for some reason, although the target RFID tag to be read out does not exist, it is possible to read out another RFID tag rather than the target RFID tag. In such case, there is a problem of reading out the data of an actually non-existing article as if existed. This problem is, in a word, derived from the fact that RFID tags are not recognized with the unaided eye.

(3) As means for avoiding this problem, utilizing RFID tags in combination with 1D color bit codes is conceivable. That is, the drawback of the RFID tags can be compensated by affixing both RFID tag and 1D color bit code to a single article.

Then, it is practicable to use an apparatus able to read out both RFID tag and 1D color bit code. It is preferable for the apparatus to compare the data read out of the RFID tag with the data obtained by recognizing the 1D color bit code, and then perform a display indicating the result (whether conforming to each other or not).

In the case of such usage, it is preferable, for example, to record a unitary data as the data of the RFID tag data and color bit code data. In doing so, at the time of readout, by collating the RFID tag and the color bit code, if the both are conforming, the object article can be recognized as existing.

It is preferable to perform this data collation if possible.

However, in practice, articles may be attached with:
(a) both a tag and a code;
(b) only an RFID tag; and
(c) only a color bit code.
As such, mixed cases are conceivable.

In such cases, by utilizing the afore described "corresponding pattern specific display" and "recognized data display", and displaying whether the read-out result involves a combination use with an RFID tag, and whether the result has been collated with the RFID tag read-out result, the operator can be intuitively shown the amendment to the RFID tag read-out result.

Specifically speaking,
(a) for an article attached with the both,
a green rectangular frame is utilized for the "corresponding pattern specific display";

when conformity of data is confirmed in collation with the RFID tag, the conforming data is displayed in green characters as the "recognized data display";

when nonconformity of data is confirmed in collation with the RFID tag, the 1D color bit code data is displayed in red characters as the "recognized data display".

By virtue of such displays as above, the operator can not only realize that both RFID tag and 1D color bit code were recognized but also know whether both data were conforming or not.

(b) To an article with an RFID tag only,
the "corresponding pattern specific display" and "data display" cannot be applied.

(c) For an article with a color bit code only,
a red rectangular frame is utilized for the "corresponding pattern specific display"; and

the data is displayed in red characters as the "data display".

By virtue of such displays as above, the operator can realize that only a 1D color bit code was recognized.

By virtue of such processing results, the operator can be intuitively shown the amendment to the RFID read-out result. Further, needless to say, similar devisal may also be applied to the cases of the 1D color bit code in combination use with common barcodes or automatic recognition means other than RFID tags.

Besides, the so-called RFID tags, also referred to as RF tags at times, can be any tags that transmit and receive data through radio waves. For example, wireless tags, IC tags and the like are also included.

### Part 6: Computers and software

So far, methods for displaying recognition results of optical recognition codes have been described. In the embodiment set forth above, the image data are basically premised on digital image data. Therefore, it is preferable to carry out the process by means of hardware and software capable of processing such image data.

Further, it is preferable that means in the computer 14 described above be established by a program realizing each means and a computer 14 executing the program.

### Part 7: Applications

The optical recognition code recognizer described in the embodiment, mainly, comprises a camera means, a computer 14, a displaying means 16 in correspondence therewith and the like. However, the recognizer may be configured by the above components either in a separate manner or in an integrated manner.

For example, the recognizer is also preferably configured by a CCD camera and a personal computer. Further, it is yet preferable to be configured by a PDA or a handheld terminal provided with a camera means, or even by a handheld communication terminal such as a cell-phone, etc., provided with a camera means.

Furthermore, 1D color bit codes were taken as an example in the description; however, it is also possible, of course, to apply the present invention to other optical recognition codes.

## Claims

1. An optical recognition code recognizer capturing an image including a code symbol that is a symbol of an optical recognition code and decoding a data denoted by the code symbol from an obtained original image, the recognizer comprising:
a corresponding pattern specific display creating means for creating a "corresponding pattern specific display" indicating the code symbol; and
a displaying means for displaying the created corresponding pattern specific display superimposed on the original image.

2. An optical recognition code recognizer capturing an image including a code symbol that is a symbol of an optical recognition code and decoding a data denoted by the code symbol from an obtained original image, the recognizer comprising:
a recognizing means for decoding a data denoted by the code symbol;
a recognized data display creating means for creating an image denoting the data in association with the code symbol from which the data is recognized; and
a displaying means for displaying the created recognized data display superimposed on the original image.
"association" means "to know the data as of the code symbol", and typically refers to displaying the data more adjacent to the code symbol than other data displays. However, the display does not have to be adjacent to the code symbol as long as the data can be known of which code symbol, such as utilizing a lead line and the like.
Hereinafter, in the claims, the word "association" will be used in this sense.

3. The optical recognition code recognizer according to claim 1, further comprising:
a recognizing means for decoding a data denoted by the code symbol;
a recognized data display creating means for creating an image denoting the data in association with the corresponding pattern specific display of the code symbol from which the data is recognized; and
a displaying means for displaying the created recognized data display superimposed on the original image.

4. An optical recognition code recognizer capturing an image including a plurality of code symbols each of which is a symbol of an optical recognition code and decoding each data denoted by each code symbol from an obtained original image, the recognizer comprising:
a corresponding pattern specific display creating means for creating a "corresponding pattern specific display" indicating the code symbol; and
a displaying means for displaying the created corresponding pattern specific display superimposed on the original image.

5. An optical recognition code recognizer capturing an image including a plurality of code symbols each of which is a symbol of an optical recognition code and decoding each data denoted by each code symbol from an obtained original image, the recognizer comprising:
a recognizing means for decoding a data denoted by the code symbol;
a recognized data display creating means for creating an image denoting the data in association with the code symbol from which the data is recognized; and
a displaying means for displaying the created recognized data display superimposed on the original image.

6. The optical recognition code recognizer according to claim 4, further comprising:
a recognizing means for decoding a data denoted by the code symbol;
a recognized data display creating means for creating an image denoting the data in association with the corresponding pattern specific display of the code symbol from which the data is recognized; and
a displaying means for displaying the created recognized data display superimposed on the original image.

7. The optical recognition code recognizer according to any one of claims 1 to 6, further comprising:
a nonconforming pattern display creating means for creating a nonconforming pattern display indicating an un-decodable region of a plurality of serial color areas in the original image; and
a displaying means for displaying the nonconforming pattern display superimposed on the original image.

8. The optical recognition code recognizer according to claim 7, wherein the nonconforming pattern image nonconforms to any of a preset cell alignment rule, cell number rule and cell alignment numerical rule, and conforms to any or all of a preset cell alignment quasi rule, cell number quasi rule and cell alignment numerical quasi rule.

9. An optical recognition code recognizer capturing an image including a code symbol that is a symbol of an optical recognition code, decoding a data denoted by the code symbol from an obtained original image, and checking whether a decoded result conforms to a search object data, the recognizer comprising:
a recognizing means for decoding a data denoted by the code symbol;
a checking means for checking whether the decoded result conforms to the search object data;
a corresponding pattern specific display creating means for creating a "target corresponding pattern specific display" indicating the code symbol when the check result shows that the decoded result conforms to the search object data; and
a displaying means for displaying the created corresponding pattern specific display superimposed on the original image.

10. The optical recognition code recognizer according to claim 9,
wherein the corresponding pattern specific display creating means creates a nontarget corresponding pattern specific display indicating the code symbol when the check result shows that the decoded result nonconforms to the search object data; the nontarget corresponding pattern specific display being different from the target corresponding pattern specific display.

11. The optical recognition code recognizer according to any one of claims 1 to 6, further comprising:
an RFID reading means for reading out an RFID tag value; and
a comparing means for comparing the data decoded from the code symbol with the data read out by the RFID reading means,
wherein the corresponding pattern specific display creating means creates different corresponding pattern specific displays between the cases that the data decoded from the code symbol conforms and nonconforms to the data read out by the RFID reading means.

12. The optical recognition code recognizer according to any one of claims 1 to 6, further comprising:
an RFID reading means for reading out an RFID tag value; and
a comparing means for comparing the data decoded from the code symbol with the data read out by the RFID reading means,
wherein the recognized data display creating means creates different recognized data displays between the cases that the data decoded from the code symbol conforms and nonconforms to the data read out by the RFID readout means.

13. An optical recognition code recognizing method capturing an image including a code symbol that is a symbol of an optical recognition code and decoding a data denoted by the code symbol from an obtained original image, the method comprising the steps of:
(a13) creating a "corresponding pattern specific display" indicating the code symbol; and
(b13) displaying the created "corresponding pattern specific display" superimposed on the original image.

14. An optical recognition code recognizing method capturing an image including a code symbol that is a symbol of an optical recognition code and decoding a data denoted by the code symbol from an obtained original image, the method comprising the steps of:
(a14) decoding a data denoted by the code symbol;
(b14) creating a recognized data display by creating an image denoting the data in association with the code symbol from which the data is recognized; and
(c14) displaying the created recognized data display superimposed on the original image.

15. The optical recognition code recognizing method according to claim 13, further comprising the steps of:
(a15) decoding a data denoted by the code symbol;
(b15) creating a recognized data display by creating an image denoting the data in association with the corresponding pattern specific display of the code symbol from which the data is recognized; and
(c15) displaying the created recognized data display superimposed on the original image.

16. An optical recognition code recognizing method capturing an image including a plurality of code symbols each of which is a symbol of an optical recognition code and decoding each data denoted by each code symbol from an obtained original image, the method comprising the steps of:
(a16) creating a "corresponding pattern specific display" indicating the code symbol; and
(b16) displaying the created corresponding pattern specific display superimposed on the original image.

17. An optical recognition code recognizing method capturing an image including a plurality of code symbols each of which is a symbol of an optical recognition code and decoding a data denoted by the code symbol from an obtained original image, the method comprising the steps of:
(a17) decoding a data denoted by the code symbol;
(b17) creating a recognized data display by creating an image denoting the data in association with the code symbol from which the data is recognized; and
(c17) displaying the created recognized data display superimposed on the original image.

18. The optical recognition code recognizing method according to claim 16, further comprising the steps of:
(a18) decoding a data denoted by the code symbol;
(b18) creating a recognized data display by creating an image denoting the data in association with the corresponding pattern specific display of the code symbol from which the data is recognized; and
(c18) displaying the created recognized data display superimposed on the original image.

19. The optical recognition code recognizing method according to any one of claims 13 to 18, further comprising the steps of:
(a19) creating a nonconforming pattern display indicating an un-decodable region of a plurality of serial color areas in the original image; and
(b19) displaying the nonconforming pattern display superimposed on the original image.

20. The optical recognition code recognizing method according to claim 19, wherein the nonconforming pattern image nonconforms to any of a preset cell alignment rule, cell number rule and cell alignment numerical rule, and conforms to any or all of a preset cell alignment quasi rule, cell number quasi rule and cell alignment numerical quasi rule.

21. An optical recognition code recognizing method capturing an image including a code symbol that is a symbol of an optical recognition code, decoding a data denoted by the code symbol from an obtained original image, and checking whether a decoded result conforms to a search object data, the method comprising the steps of:
(a21) decoding a data denoted by the code symbol;
(b21) checking whether the decoded result conforms to the search object data;
(c21) creating a "target corresponding pattern specific display" indicating the code symbol when the check result shows that the decoded result conforms to the search object data; and
(d21) displaying the created target corresponding pattern specific display superimposed on the original image.

22. The optical recognition code recognizing method according to claim 21, wherein step (c21) creates a nontarget corresponding pattern specific display indicating the code symbol when the check result shows that the decoded result nonconforms to the search object data; the nontarget corresponding pattern specific display being different from the target corresponding pattern specific display.

23. The optical recognition code recognizing method according to any one of claims 13 to 18, further comprising the steps of:
(a23) reading out an RFID tag value; and
(b23) comparing the data decoded from the code symbol with the data read out in step (a23),
wherein different corresponding pattern specific displays are created in the step of creating the corresponding pattern specific display between the cases that the data decoded from the code symbol conforms and nonconforms to the data read out in step (a23).

24. The optical recognition code recognizing method according to any one of claims 13 to 18, further comprising the steps of:
(a24) reading out an RFID tag value; and
(b24) comparing the data decoded from the code symbol with the data read out in step (a24),
wherein different recognized data displays are created in the step of creating the recognized data display between the cases that the data decoded from the code symbol conforms and nonconforms to the data read out in step (a24).

25. A program activating a computer as an optical recognition code recognizer capturing an image including a code symbol that is a symbol of an optical recognition code and decoding a data denoted by the code symbol from an obtained original image, the program setting the computer to execute the procedures of:
(a25) creating a "corresponding pattern specific display" indicating the code symbol; and
(b25) displaying the created corresponding pattern specific display superimposed on the original image.

26. A program activating a computer as an optical recognition code recognizer capturing an image including a code symbol that is a symbol of an optical recognition code and decoding a data denoted by the code symbol from an obtained original image, the program setting the computer to execute the procedures of:
(a26) decoding a data denoted by the code symbol;
(b26) creating a recognized data display by creating an image denoting the data in association with the code symbol from which the data is recognized; and
(c26) displaying the created recognized data display superimposed on the original image.

27. The program according to claim 25, further setting the computer to execute the procedures of:
(a27) decoding a data denoted by the code symbol;
(b27) creating a recognized data display by creating an image denoting the data in association with the corresponding pattern specific display of the code symbol from which the data is recognized; and
(c27) displaying the created recognized data display superimposed on the original image.

28. A program activating a computer as an optical recognition code recognizer capturing an image including a plurality of code symbols each of which is a symbol of an optical recognition code and decoding each data denoted by each code symbol from an obtained original image, the program setting the computer to execute the procedures of:
(a28) creating a "corresponding pattern specific display" indicating the code symbol; and
(b28) displaying the created corresponding pattern specific display superimposed on the original image.

29. A program activating a computer as an optical recognition code recognizer capturing an image including a plurality of code symbols each of which is a symbol of an optical recognition code and decoding each data denoted by each code symbol from an obtained original image, the program setting the computer to execute the procedures of:
(a29) decoding a data denoted by the code symbol,
(b29) creating a recognized data display by creating an image denoting the data in association with the code symbol from which the data is recognized; and
(c29) displaying the created recognized data display superimposed on the original image.

30. The program according to claim 28, further setting the computer to execute the procedures of:
(a30) decoding a data denoted by the code symbol;
(b30) creating a recognized data display by creating an image denoting the data in association with the corresponding pattern specific display of the code symbol from which the data is recognized; and
(c30) displaying the created recognized data display superimposed on the original image.

31. The program according to any one of claims 25 to 30, further setting the computer to execute the procedures of:
(a31) creating a nonconforming pattern display indicating an un-decodable region of a plurality of serial color areas in the original image; and
(b31) displaying the nonconforming pattern display superimposed on the original image.

32. The program according to claim 31, wherein the nonconforming pattern image nonconforms to any of a preset cell alignment rule, cell number rule and cell alignment numerical rule, and conforms to any or all of a preset cell alignment quasi rule, cell number quasi rule and cell alignment numerical quasi rule.

33. A program activating a computer as an optical recognition code recognizer capturing an image including a code symbol that is a symbol of an optical recognition code, decoding a data denoted by the code symbol from an obtained original image, and checking whether a decoded result conforms to a search object data, the program setting the computer to execute the procedures of:
(a33) decoding a data denoted by the code symbol;
(b33) checking whether the decoded result conforms to the search object data;
(c33) creating a "target corresponding pattern specific display" indicating the code symbol when the check result shows that the decoded result conforms to the search object data; and
(d33) displaying the created target corresponding pattern specific display superimposed on the original image.

34. The program according to claim 33, wherein procedure (c33) creates a "nontarget corresponding pattern specific display" indicating the code symbol when the check result shows that the decoded result nonconforms to the search object data; the nontarget corresponding pattern specific display being different from the target corresponding pattern specific display.

35. The program according to any one of claims 25 to 30, further setting the computer to execute the procedures of:
(a35) reading out an RFID tag value; and
(b35) comparing the data decoded from the code symbol with the data read out in procedure (a35),
wherein the procedure of creating the corresponding pattern specific display creates different corresponding pattern specific displays between the cases that the data decoded from the code symbol conforms and nonconforms to the data read out in procedure (a35).

36. The program according to any one of claims 25 to 30, further setting the computer to execute the procedures of:
(a36) reading out an RFID tag value; and
(b36) comparing the data decoded from the code symbol with the data read out in procedure (a36),
wherein the procedure of creating the recognized data display creates different recognized data displays between the cases that the data decoded from the code symbol conforms and nonconforms to the data read out in procedure (a36).
